# EUROPEAN PATENT SPECIFICATION

(11) **EP 1 497 061 B1**
(45) Date of publication and mention of the grant of the patent: **18.07.2007**
(21) Application number: 03744910.5
(22) Date of filing: 24.03.2003
(51) Int. Cl.: B22F 9/14, C01B 21/076, C23C 4/10

(54) **POWDER FORMATION METHOD**
VERFAHREN ZUR ERZEUGUNG VON PULVER
PROCEDE DE PRODUCTION DE POUDRES

(30) Priority: 23.03.2002 GB 0206906; 17.07.2002 GB 0216712
(43) Date of publication of application: 19.01.2005
(73) Proprietor: Metal Nanopowders Limited, Birmingham B15 1TS (GB)
(72) Inventor: CHANG, Isaac, Tsz, Hong, Birmingham B30 1BQ (GB)
(74) Representative: Ward, David Ian
(86) International application number: PCT/GB2003/001250
(87) International publication number: WO 2003/080275

(56) References cited:
- FR-A- 2 727 635
- US-A- 4 731 515
- US-A- 5 294 242
- US-A- 5 879 518
- PATENT ABSTRACTS OF JAPAN vol. 1995, no. 06, 31 July 1995 (1995-07-31) & JP 07 070615 A (SANYO SPECIAL STEEL CO LTD), 14 March 1995 (1995-03-14)

## Description

The present invention relates to a method for the production of submicron powders.

There is an increasing demand for fine powders with particle size below 1 µm for a range of applications including catalysis, low temperature sintering, solid rocket fuel, cold-gas spray coating, powder injection moulding, magnetic targetted carriers, metallic paint and conducting paste. A powder with a particle size below 1 µm has extremely high reactivity and can be accelerated to the same velocity as that of a transporting gas medium. These unique properties allow such powders to enhance (i) the rate of heat-release during burning for solid rocket fuel, (ii) spray coating at low temperature, (iii) magnetic properties, (iv) reactivity and (iv) sintering kinetics at lower temperatures for the densification of powder materials.

Conventional industrial production of metal powders by such processes as reduction, decomposition and gas/water atomisation produces a wide size distribution from 2-500 µm and a range of particle morphology from spherical to irregular. The weight fraction of particles with size below 2 µm is usually below 5%. These conventional industrial processes therefore have a very low yield for fine powder particles and therefore are not economically viable for the large scale production of fine powder particles.

Alternative methods (e.g. inert gas condensation (IGC), chemical vapour condensation (CVC), mechanochemical processing, plasma atomisation and sonochemical synthesis) have been developed and have demonstrated successfully the production of nanosized metal powders. The IGC method involves evaporation of the material into its vapour state inside a vacuum chamber using either resistive heating, electron beam heating or a sputtering system. Above the evaporation source is a cold finger, and a region of supersaturated metal vapour between the cold finger and the evaporation source, which nucleates small 'liquid-like' particles. The gas convection between the hot evaporation source and the cold finger transports the 'liquid-like' particles away from the evaporation source region. These particles then solidify onto the cold finger as ultrafine solid particles. Another variant of the IGC method involves the use of chemical vapour such as CVC rather than the physical vapour. All IGC-based methods require expensive vacuum systems or a chemical reaction chamber. Furthermore, such methods are currently limited to small batch production.

A non-vacuum based method (plasma atomisation) involves the melting and evaporation of a thin wire of material by a plasma torch. The vapour is then condensed by the inert gas around the plasma. Although the production yield of this method is high, the capital cost of the plasma torch and the necessary ancillary cooling systems can be very expensive. Furthermore, this method also requires an expensive powder handling system to protect the fine powder particles from exposure to air.

A mechanochemical processing method involves a reaction between an oxide powder and a reducing additive induced by high-energy ball milling. The method leads to the formation of by-products, which need to be removed by a subsequent purification process. Consequently, the mechanochemical processing method is expensive and gives a low yield of submicron sized powder.

The sonochemical synthesis of nanosized powder is based on the use of the acoustic cavitation phenomenon to decompose volatile solvent precursors to ultrafine solid powder particles. The sonochemical synthesis method is less widely applicable due to the need for volatile solvent precursors. In addition, several purification stages are required to extract the ultrafine powder particles.

Coatings, especially those having a thickness greater than 1 µm, are usually deposited using thermal spraying techniques. However, such coatings usually contain a significant level of porosity, which can lead to inferior surface properties.

US 5,879,518 discloses a method and apparatus for producing small particles using a pair of elongated consumable electrodes mounted co-axially in a housing. The electrodes are spaced apart and an arc ignited in the gap between the electrodes to gasify the electrode material. The material ejected from the electrodes moves radially outwardly until it becomes entrained in an annular curtain of coolant gas.

US 4,731,515 discloses a method and apparatus for making powders produced by pulse electro-discharge machining of electrically conductive electrodes which are immersed in a cryogenic dielectric. Particles produced are generally in the 10 to 300 micron range although the apparatus can be configured to produce particles smaller than 10 microns.

FR2727635 discloses a reactor and method for producing fine or ultra-fine metal particles. A plasma is formed between an anode and a cathode within a sealed housing. An inert gas cooled to below 70°C is passed through the housing and serves to cool the particles formed and to carry them out of the housing.

US 5,294,242 produces a metal powder having a mean particle size of between about 30 and about 60 microns. Molten metal is atomised using an electric arc spray gun, the molten metal being quenched by spraying into a liquid cryogen.

It is an object of the present invention to provide an improved process for the production of submicron particle powders and for depositing a coating on a substrate and an apparatus for carrying out the processes which obviate or mitigate one or more of the aforementioned disadvantages.

According to a first aspect of the present invention, there is provided a process for the production of submicron particles comprising the steps of :-
(i) placing first and second electrodes in a volume of coolant maintained at a temperature of less than 200 K, the electrodes being mutually spaced,
(ii) passing an electrical current across the electrodes whereby to generate an electrical arc therebetween,
(iii) maintaining a stable arc by controlling the relative spacing between the two electrodes to melt or evaporate and separate material from at least one of the electrodes such that droplets of said material are formed, and
(iv) quenching said droplets to form said submicron particles of the material in the coolant.

The current applied in step (ii) may be alternating or direct.

In a preferred embodiment, the electrodes are initially in contact when the electrical current is passed through them, the arc of step (ii) being created by moving them apart.

Suitable electrode materials (and hence the particles formed) include metals (eg. iron, tungsten, aluminium, titanium, magnesium and nickel), metal alloys (eg. low carbon steel, cast iron, TiAl, Ti-6Al-4V, stainless steel, tool steel, Fe-Ni-Co-Cr-Mo, Al-Cu-Fe-Mg-Si, Ni-Co-Cr-Fe-W, Cu-Ni, Cu-Sn, Mg-Al-Mn-Si and Co-Cr-Ni-Fe-Mo-W), graphite and other compounds, eg. carbides (such as SiC, WC), nitrides (such as TiN, AlN and Si₃N₄), oxides (such as PbTiO₃, TiO₂ and SnO₂), noble metals (Au, Pt, Ag etc.), amorphous compositions (eg. Au-Ge, Co-Fe-B-Si-B-Mo, Zr-Al-Ni-Cu) and metal hydrides (such as MgH₂). The electrodes may be bilayer or multilayer. For examples, bilayer electrodes can be made up of an outer layer of graphite (or gold) and an inner core of Fe for the production of nanosized particles comprising of a shell of graphite (or gold) and a core of iron or alternatively an outer layer of tin (or copper) and an inner core of aluminium (or iron) for the production of nanosized particles comprising tin (or copper) coated aluminium (or iron). These coated nanoparticles can have applications in magnetic targetted carriers and liquid phase sintering for powder metallurgical components. In addition, the multilayer electrodes can be made up of alternative layers of Fe and Cu for the production of nanosized particle of multilayers of Fe and Cu. The multilayer nanosized powders can have application in giant magnetoresistance devices.

The coolant is preferably maintained at a temperature of less than 100 K. Most preferably, the coolant is liquid nitrogen (77 K) or liquid argon (87K). For certain metals such as Ti, the preferred coolant is liquid argon.

The coolant may be inert (as in the case of liquid nitrogen). However a quantity of reactant may be mixed with an essentially inert coolant such that the material melted/evaporated in step (iii) reacts with the reactant prior to being quenched in step (iv). In a preferred embodiment a quantity of solvent is introduced into the coolant after step (iv) so as to protect the submicron particles after the removal of the coolant for collection. Furthermore, a small quantity of surfactant can be introduced into the coolant prior to step (iii) or after the solvent addition to prevent agglomeration of the submicron particles. The isolated submicron particles can be treated further with chemicals to make them active to specific chemical molecules.

During step (iii), a flow of coolant may be introduced into the spacing between the electrodes and used to displace droplets formed out of the hot zone of the arc and to top up the coolant to maintain a constant level of coolant.

Preferably step (iii) is achieved by moving, preferably continuously, one of the electrodes relative to the other as material is melted/evaporated. For example, one of the electrodes may be replaced by a non-consuming electrode such as tungsten to provide the stable arc and electrode comprising the materials to be evaporated and condensed into submicron particles can be moved (e.g. lowered) into the arc at a controllable rate.

During step (iii), relative rotation may be induced between the electrodes (eg. by rotating one of the electrodes) whereby to promote separation of the material from the electrode.

Said process may be a batch process, the particles being recovered after removal of the coolant (evaporation in the case of liquid nitrogen). It will be understood that the particles are protected from contact by air whilst contained within the coolant.

Alternatively, the process may be continuous, the method including a step of continuously passing coolant over the electrodes. In a particularly preferred embodiment, the particles are separated from the coolant after passing over the electrodes and the coolant is recycled back over the electrodes in a continuous circuit.

The electrodes may have the same or different chemical compositions. Particularly preferred anode/cathode combinations are:-
graphite-graphite,
graphite-steel,
tungsten-steel,
tungsten-cast iron,
tungsten-aluminium (or aluminium alloy),
tungsten-copper,
tungsten-nickel
tungsten-iron
tungsten-gold
tungsten-titanium,
tungsten-magnesium and
tungsten-stainless steel.

It will be understood that where the anode and cathode have different compositions, the submicron particle powder formed will have the composition of the anode, the cathode, a mixed composition or composite or multilayer composition or will be the product of the reaction between the two electrode materials. The exact composition and structure of the powder depends, inter alia, on the electrode materials, the current density (and hence temperature) of the arc and the melting points or evaporation temperatures or electrical conductivity of the electrodes.

In addition, the anode or cathode may each comprise more than one material, such that, in use, generation of heat by the arc discharge causes the materials to react (solid, molten or vapour phase) before solidification or condensation. Alternatively, the anode and/or cathode may comprise bi-layer or multilayer structures of different materials, such that the layer structures are maintained in the submicron particles formed at the end of the process.

It will be understood that a submicron powder can be produced according to the method of the invention.

An embodiment of the invention will now be described by way of example only with reference to the accompanying drawings in which
Figures 1 is a schematic representation of an apparatus used in accordance with the invention,
Figures 2 to 5 are micrographs of powders produced using the apparatus of Figure 1, and
Figure 6 is a micrograph of a coating produced using the apparatus of Figure 1,

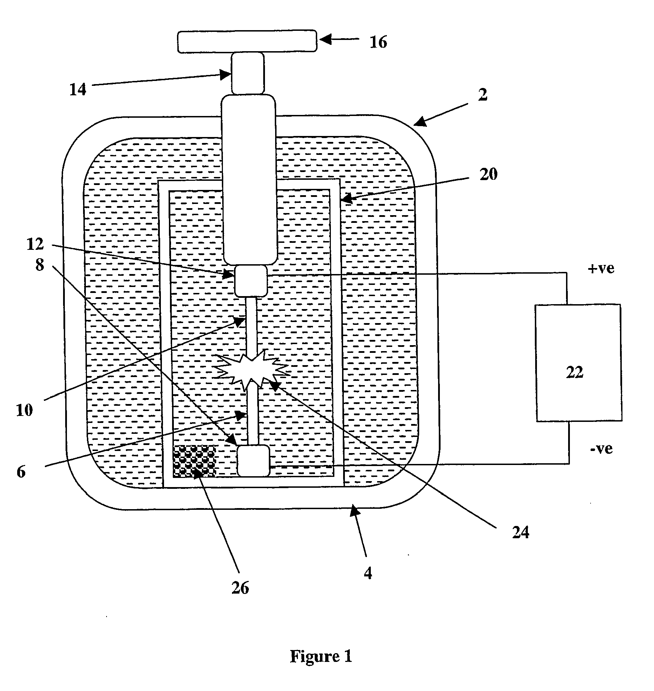

Referring to Figure 1, a submicron powder producing apparatus comprises a sealable container 2 having a thermally insulated wall 4. A first electrode (cathode) 6 in the form of a rod is mounted on a copper block 8 at the base of the container 2 and extends upwardly towards a similarly shaped second electrode (anode) 10. The anode 10 extends downwardly towards the cathode 6 and is also mounted on a copper block 12 which in turn is suspended on a PTFE rod 14 which passes through the top wall of the container 2 and ends in a manually adjustable knob 16. The rod 14 and top wall are provided with cooperating screw threads such that the anode 10 can be raised or lowered by turning the knob 16. The relative positioning of the anode 10 and cathode 6 is stabilised by the provision of a PTFE support frame 20. The anode, 10 the cathode 6, the supporting blocks 8 and 12, the rod 14 and the frame 20 form a sub-assembly which can be raised or lowered out of or into the container as a unit. A dc power supply 22 capable of supplying up to 90A is provided externally of the container 2, and electrical connections are provided to the anode 10 and cathode 6 via the copper blocks 12, 8 to which they are mounted. In an alternative embodiment (not shown), a powder collector plate is provided on the sidewall of the container.

In use, the rod 14 is adjusted so that the anode 10 and the cathode 6 are in contact and the electrode sub-assembly is lowered into the container. The container 2 is then filled with liquid nitrogen and sealed. After thermal equilibration a dc current is applied to the electrodes 6,10 and the knob 16 is turned so as to introduce a gap between the electrodes 6,10 until an electrical discharge arc 24 is induced therebetween. Once the arc 24 is formed, the surface of the anode 10 and/or cathode 6 begins to melt and/or evaporate and fragment into droplets and/or gaseous clusters, which are then quenched and/or condensed into fine (submicron) solid powder particles 26 by the surrounding liquid nitrogen. As a result, the spacing between the anode 10 and the cathode 6 is increased due to removal of material from the anode 10 and/or cathode 6, thereby destabilising the arc 24. In order to stabilise the arc 24 during the continuous production of powders, the anode 10 is lowered by means of the knob 16. This helps to maintain a constant spacing between the anode 10 and the cathode 6, so as to maintain a stable arc 24. After the process has been completed, the worn electrodes 6,10 and PTFE frame 20 are removed from the container 2 leaving the powder-containing liquid nitrogen. This can be poured into a storage container for subsequent use (the powder thereby being protected from air) or the nitrogen can be evaporated to leave free powder.

### Example 1

Anode: 6 mm diameter titanium rod
Cathode: 3 mm diameter tungsten rod
Current: 60 A, applied for 40 seconds.

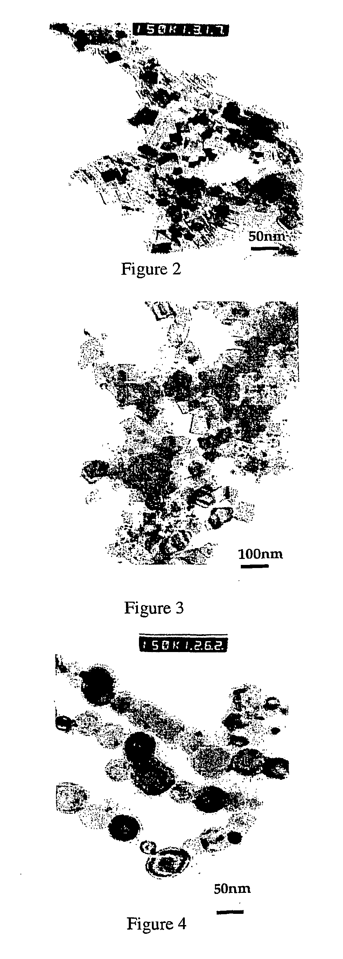

Processing was carried out using the apparatus and method described above to give 1 g of TiN powder. Analysis by transmission electron microscopy (TEM) indicated that the particles had an average size of about 40nm, the particles being present as agglomerates (figure 2).

### Example 2

Anode: 6 mm diameter titanium rod
Cathode: 3 mm diameter tungsten rod
Current: 40 A, applied for 40 seconds.

Processing was carried out using the apparatus and method described above to give 1 g of titanium powder. Analysis by transmission electron microscopy (TEM) indicated that the particles had an average size of about 90nm, the particles being present as agglomerates (figure 3).

### Example 3

Anode: 6 mm diameter iron rod
Cathode: 3mm diameter tungsten rod
Current: 60 A, applied for 40 seconds

Processing was carried out as for Example 1 to give 1 g of iron powders. Analysis by transmission electron microscopy (TEM) indicated that the particles had an average size of about 60nm (figure 4).

### Example 4

Anode: 6 mm diameter aluminium rod
Cathode: 3 mm diameter tungsten rod
Current: 40 A, applied for 30 seconds

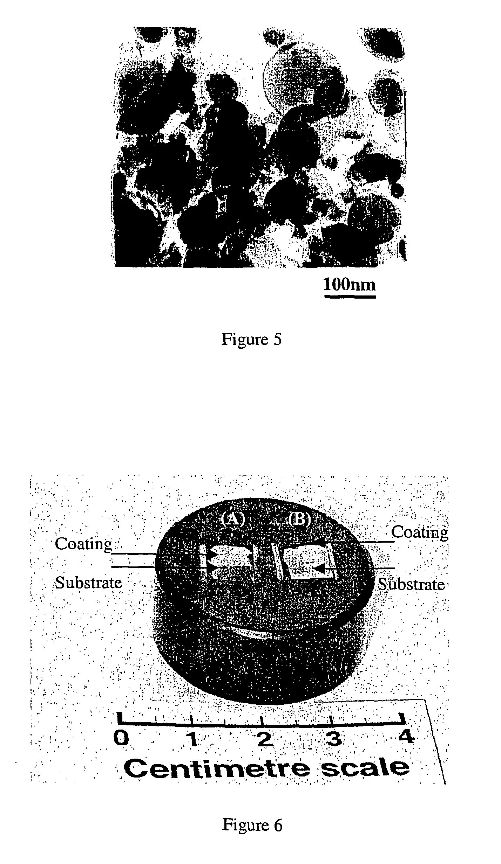

Processing was carried out as for Example 1 to give 3 g of aluminium powder. Analysis by transmission electron microscopy (TEM) indicated that the particles had an average size of about 100nm (figure 5).

### Example 5

Anode: 3 mm diameter Fe-2.5%C (grey cast iron) rod
Cathode: 6 mm diameter Fe-2.5%C (grey cast iron) rod
Current: 60 A, applied for 1 second.

Processing was carried out as for Example 1 to give 1 g of cast iron powder. Analysis by scanning electron microscopy (SEM) indicated that about 20% of the particles had a size of less than 1 µm. Substantially all the particles were spherical.

It will be understood that the particle size, size distribution and morphology can be controlled by variation in the current density, the time interval for arc discharge, the geometry and relative positioning of the electrodes, relative motion of the electrodes, electrode materials, temperature and nature of the coolant. For example, only about 20% of the particles were smaller than 1 µm in Example 5. This is due to the relatively low melting point of the cast iron, which results in a larger melt volume at the electrodes which can not be rapidly quenched by the liquid nitrogen. It is anticipated that lowering the current (and therefore temperature) of the arc will reduce the melt volume, increase the rate of quenching and therefore increase the proportion of particles below 1 µm in diameter.

In a modification of the above apparatus (not shown), the anode is mounted on a spindle such that it can rotate about its longitudinal axis. This modification enhances the fragmentation of the melt by additional centrifugal force induced by the rotational motion.

In a further modification (not shown) the container is provided with an inlet and an outlet with additional pipe work connecting the two, thereby forming a continuous flow path through the container. A compressor and filtration unit is provided downstream of the outlet. In use, the liquid nitrogen evaporates on leaving the container through the outlet and carries with it the submicron powder. The powder is recovered in the filtration unit and the nitrogen returned to its liquid state by the compressor. This arrangement therefore allows continuous production of the powder until the anode requires replacement.

In yet a further modification, the dc power supply is replaced by an ac power supply. a.c. current causes the electrodes to undergo a cycle of melting/evaporation and freezing/condensation which in turn limits the residence time interval of the melt or vapour phase. This in turn minimizes the volume of melt/vapour near the surface of the electrodes and allows the surrounding liquid nitrogen to quench the small volume of melt/vapour more effectively to produce a fine powder.

It will readily be appreciated that the arc discharge method of the present invention is not particularly limited to any particular technology and can be applied in a diverse range of applications where submicron powders are required. Such applications include solid rocket fuel (eg. Al-Al or Ti-Ti electrodes), catalysts (eg. Ni-Ni electrodes), conducting paste (eg. Cu-Cu electrodes), metallic paints (eg. Al-Al electrodes), hydrogen storage materials (eg. Mg-Mg electrodes), automotive powder metallurgy processed parts (eg. stainless steel-stainless steel electrodes), soft magnetic powder metallurgy processed parts (eg. Fe-Fe electrodes), magnetic targeted carriers (e.g. W - Fe/C bilayer electrodes), thermite welding (eg. A1-A1 electrodes), cold-gas spray deposition (eg. tool steel-tool steel electrodes) and dyes. The process is also useful where coating are required, for example wear resistant coatings (TiN, TiC or TiO₂) for engineering components or medical implants.

## Claims

1. A process for the production of submicron particles comprising the steps of :-
(i) placing first and second electrodes in a volume of coolant maintained at a temperature of less than 200K, the electrodes being mutually spaced,
(ii) passing an electrical current across the electrodes whereby to generate an electrical arc therebetween,
(iii) maintaining a stable arc by controlling the relative spacing between the two electrodes to be constant while melting or evaporating and separating material from at least one of the electrodes such that droplets of said material are formed, and
(iv) quenching said droplets to form said submicron particles of the material in the coolant.

2. The method of claim 1, wherein the electrodes are initially in contact when the electrical current is passed through them, the arc of step (ii) being created by moving them apart.

3. The method of claim 1 or 2, wherein the electrodes used in the method are made from materials selected from metals, metal alloys, graphite carbides, nitrides, oxides, noble metals, amorphous compositions and metal hydrides.

4. The method of claim 3, wherein the metal is selected from one or more of iron, tungsten, aluminium, titanium, magnesium and nickel, the metal alloy is selected from one or more of low carbon steel, cast iron, TiAl, Ti-6Al-4V, stainless steel, tool steel, Fe-Ni-Co-Cr-Mo, Al-Cu-Fe-Mg-Si, Ni-Co-Cr-Fe-W, Cu-Ni, Cu-Sn, Mg-Al-Mn-Si and Co-Cr-Ni-Fe-Mo-W, the carbide is selected from one or more of SiC and WC, the nitride is selected from one or more of TiN, AlN and Si₃N₄, the oxide is selected from one or more of PbTiO₃, TiO₂ and SnO₂, the noble metal is selected from one or more of Au, Pt and Ag, the amorphous composition is selected from one or more of Au-Ge, Co-Fe-B-Si-B-Mo, and Zr-Al-Ni-Cu, and the metal hydride is MgH₂.

5. The method of any preceding claim, wherein one or both electrodes are bilayer or multilayer.

6. The method of claim 5, wherein the or each bilayer electrode is made up of an outer layer of graphite and an inner core of Fe or an outer layer of tin or copper and an inner core of aluminium or iron.

7. The method of claim 5, wherein the or each multilayer electrode is made up of alternate layers of Fe and Cu.

8. The method of any preceding claim, wherein the coolant is liquid nitrogen or liquid argon.

9. The method of any preceding claim, wherein a quantity of reactant is mixed with an essentially inert coolant such that the material melted/evaporated in step (iii) reacts with the reactant prior to being quenched in step (iv).

10. The method of any preceding claim, wherein a quantity of solvent is introduced into the coolant after step (iv) so as to protect the submicron particles after the removal of the coolant for collection.

11. The method of claim 10, wherein a small quantity of surfactant is introduced into the coolant prior to step (iii) or after the solvent addition to prevent agglomeration of the submicron particles.

12. The method of any preceding claim, wherein during step (iii), a flow of coolant is introduced into the spacing between the electrodes whereby to displace droplets out of the hot zone of the arc.

13. The method of any preceding claim, wherein step (iii) is achieved by moving, preferably continuously, one of the electrodes relative to the other as material is melted/evaporated.

14. The method of any preceding claim, wherein during step (iii), relative rotation is induced between the electrodes whereby to promote separation of the material from the electrode.

15. The method of any preceding claim, wherein said process is a batch process, the particles being recovered after removal of the coolant.

16. The method of any one of claims 1 to 14, wherein the process is continuous, the method including a step of continuously passing coolant over the electrodes.

17. The method of claim 16, wherein the particles are separated from the coolant after passing over the electrodes and the coolant is recycled back over the electrodes in a continuous circuit.

## Patentansprüche

1. Verfahren zur Herstellung von Submikrometerteilchen, mit den folgenden Schritten:
(i) Anbringen erster und zweiter Elektroden in einem Volumen eines Kühlmittels, das auf einer Temperatur unter 200 K gehalten wird, wobei die Elektroden voneinander beabstandet sind,
(ii) Durchleiten von elektrischem Strom durch die Elektroden, um **dadurch** einen elektrischen Lichtbogen zwischen ihnen zu erzeugen,
(iii) Aufrechterhalten einer stabilen Bogenentladung durch Regeln des relativen Abstands zwischen den zwei Elektroden auf einen konstanten Wert während des Schmelzens oder Verdampfens und der Abtrennung von Material von mindestens einer der Elektroden, so daß Tröpfchen aus dem Material gebildet werden, und
(iv) Abschrecken der Tröpfchen, um in dem Kühlmittel die Submikrometerteilchen aus dem Material zu bilden.

2. Verfahren nach Anspruch 1, wobei die Elektroden zunächst in Kontakt miteinander sind, wenn der elektrische Strom durch sie durchgeleitet wird, wobei der Lichtbogen von Schritt (i) durch Auseinanderziehen der Elektroden erzeugt wird.

3. Verfahren nach Anspruch 1 oder 2, wobei die bei dem Verfahren verwendeten Elektroden aus Materialien bestehen, die unter Metallen, Metallegierungen, Graphit, Carbiden, Nitriden, Oxiden, Edelmetallen, amorphen Zusammensetzungen und Metalhydriden ausgewählt sind.

4. Verfahren nach Anspruch 3, wobei das Metall unter einem oder mehreren der Metalle Eisen, Wolfram, Aluminium, Titan, Magnesium und Nickel ausgewählt ist, die Metallegierung unter einer oder mehreren der Legierungen Kohlenstoffstahl, Gußeisen, TiA1, Ti-6Al-4V, Edelstahl, Werkzeugstahl, Fe-Ni-Co-Cr-Mo, Al-Cu-Fe-Mg-Si, Ni-Co-Cr-Fe-W, Cu-Ni, Cu-Sn, Mg-Al-Mn-Si und Co-Cr-Ni-Fe-Mo-W ausgewählt ist, das Carbid unter einem oder mehreren der Carbide SiC und WC ausgewählt ist, das Nitrid unter einem oder mehreren der Nitride TiN, A1N und Si3N4 ausgewählt ist, das Oxid unter einem oder mehreren der Oxide PbTiO3, Ti02 und Sn02 ausgewählt ist, das Edelmetall unter einem oder mehreren der Edelmetalle Au, Pt und Ag ausgewählt ist, die amorphe Zusammensetzung unter einer oder mehreren der Zusammensetzungen Au-Ge, Co-Fe-B-Si-B-Mo und Zr-Al-Ni-Cu ausgewählt ist und das Metallhydrid MgH2 ist.

5. Verfahren nach einem der vorstehenden Ansprüche, wobei eine oder beide Elektroden zweischichtig oder mehrschichtig sind.

6. Verfahren nach Anspruch 5, wobei die oder jede zweischichtige Elektrode aus einer äußeren Graphitschicht und einem inneren Kern aus Fe oder einer äußeren Schicht aus Zinn oder Kupfer und einem inneren Kern aus Aluminium oder Eisen besteht.

7. Verfahren nach Anspruch 5, wobei die oder jede mehrschichtige Elektrode aus abwechselnden Schichten aus Fe und Cu besteht.

8. Verfahren nach einem der vorstehenden Ansprüche, wobei das Kühlmittel flüssiger Stickstoff oder flüssiges Argon ist.

9. Verfahren nach einem der vorstehenden Ansprüche, wobei eine Menge eines Reaktanten mit einem im wesentlichen inerten Kühlmittel so vermischt wird, daß das im Schritt (iii) geschmolzene/verdampfte Material vor dem Abschrecken im Schritt (iv) mit dem Reaktanten reagiert.

10. Verfahren nach einem der vorstehenden Ansprüche, wobei nach dem Schritt (iv) eine Lösungsmittelmenge in das Kühlmittel eingebracht wird, um die Submikrometerteilchen nach dem Entfernen des Kühlmittels zum Zwecke der Sammlung zu schützen.

11. Verfahren nach Anspruch 10, wobei vor dem Schritt (iii) oder nach der Lösungsmittelzugabe eine kleine Menge Tensid in das Kühlmittel eingebracht wird, um eine Agglomeration der Submikrometerteilchen zu verhindern.

12. Verfahren nach einem der vorstehenden Ansprüche, wobei während des Schritts (iii) ein Kühlmittelzufluß in den Zwischenraum zwischen den Elektroden eingeleitet wird, um **dadurch** Tröpfchen aus der heißen Zone des Lichtbogens zu verdrängen.

13. Verfahren nach einem der vorstehenden Ansprüche, wobei der Schritt (iii) ausgeführt wird, indem eine der Elektroden, vorzugsweise kontinuierlich, bezüglich der anderen bewegt wird, während Material geschmolzen/verdampft wird.

14. Verfahren nach einem der vorstehenden Ansprüche, wobei während des Schritts (iii) eine relative Drehung zwischen den Elektroden herbeigeführt wird, um **dadurch** die Abtrennung des Materials von der Elektrode zu fördern.

15. Verfahren nach einem der vorstehenden Ansprüche, wobei der Prozeß ein diskontinuierlicher Prozeß ist, wobei die Teilchen nach Entfernen des Kühlmittels gewonnen werden.

16. Verfahren nach einem der Ansprüche 1 bis 14, wobei der Prozeß kontinuierlich ist, wobei das Verfahren einen Schritt zum kontinuierlichen Durchleiten von Kühlmittel über die Elektroden einschließt.

17. Verfahren nach Anspruch 16, wobei die Teilchen nach dem Durchgang des Kühlmittels über die Elektroden von dem Kühlmittel abgetrennt werden und das Kühlmittel in einem kontinuierlichen Kreislauf über die Elektroden zurückgeführt wird.

## Revendications

1. Procédé pour la production de particules submicroniques comprenant les étapes:
(i) de placement d'une première et d'une deuxième électrode dans un volume de refroidissant maintenu à une température de moins de 200K, les électrodes étant espacées les unes des autres,
(ii) de passage d'un courant électrique à travers les électrodes, de manière à générer un arc électrique entre celles-ci,
(iii) de maintien d'un arc stable en régulant l'espacement relatif entre les deux électrodes pour qu'il soit constant, tout en fondant ou en évaporant et en séparant un matériau provenant d'au moins une des électrodes de sorte que des gouttelettes dudit matériau sont formées, et
(iv) de trempe desdites gouttelettes pour former lesdites particules submicroniques du matériau dans le refroidissant.

2. Procédé suivant la revendication 1, dans lequel les électrodes sont initialement en contact lorsque le courant électrique est passé à travers elles, l'arc de l'étape (ii) étant créé en les éloignant.

3. Procédé suivant la revendication 1 ou 2, dans lequel les électrodes utilisées dans le procédé sont faites de matériaux choisis parmi des métaux, des alliages métalliques, du graphite, des carbures, des nitrures, des oxydes, des métaux nobles, des compositions amorphes et des hydrures métalliques.

4. Procédé suivant la revendication 3, dans lequel le métal est choisi à partir d'un ou de plusieurs parmi le fer, le tungstène, l'aluminium, le titane, le magnésium et le nickel, l'alliage métallique est choisi à partir d'un ou de plusieurs parmi un acier à basse teneur en carbone, une fonte, TiAl, Ti-6Al-4V, un acier inoxydable, un acier à outils, Fe-Ni-Co-Cr-Mo, Al-Cu-Fe-Mg-Si, Ni-Co-Cr-Fe-W, Cu-Ni, Cu-Sn, Mg-Al-Mn-Si et Co-Cr-Ni-Fe-Mo-W, le carbure est choisi à partir d'un ou de plusieurs parmi SiC et WC, le nitrure est choisi à partir d'un ou de plusieurs parmi TiN, AIN et Si₃N₄, l'oxyde est choisi à partir d'un ou de plusieurs parmi PbTiO₃, TiO₂ et SnO₂, le métal noble est choisi à partir d'un ou de plusieurs parmi Au, Pt et Ag, la composition amorphe est choisie à partir d'un ou de plusieurs parmi Au-Ge, Co-Fe-B-Si-B-Mo et Zr-Al-Ni-Cu, et l'hydrure métallique est MgH₂.

5. Procédé suivant l'une quelconque des revendications précédentes, dans lequel une électrode ou les deux sont bi-couches ou multi-couches.

6. Procédé suivant la revendication 5, dans lequel l'électrode bi-couche ou chacune est constituée d'une couche externe de graphite et d'un coeur interne de Fe ou d'une couche externe d'étain ou de cuivre et d'un coeur interne d'aluminium ou de fer.

7. Procédé suivant la revendication 5, dans lequel l'électrode multi-couche ou chacune est constituée de couches alternées de Fe et de Cu.

8. Procédé suivant l'une quelconque des revendications précédentes, dans lequel le refroidissant est de l'azote liquide ou de l'argon liquide.

9. Procédé suivant l'une quelconque des revendications précédentes, dans lequel une quantité de réactif est mélangée avec un refroidissant essentiellement inerte de sorte que le matériau fondu/évaporé dans l'étape (iii) réagit avec le réactif avant d'être trempé dans l'étape (iv).

10. Procédé suivant l'une quelconque des revendications précédentes, dans lequel une quantité de solvant est introduite dans le refroidissant après l'étape (iv) de manière à protéger les particules submicroniques après le retrait du refroidissant pour une récupération.

11. Procédé suivant la revendication 10, dans lequel une petite quantité de tensioactif est introduite dans le refroidissant avant l'étape (iii) ou après l'ajout du solvant pour prévenir l'agglomération des particules submicroniques.

12. Procédé suivant l'une quelconque des revendications précédentes, dans lequel durant l'étape (iii), une circulation de refroidissant est introduite dans l'espacement entre les électrodes, de manière à déplacer les gouttelettes hors de la zone chaude de l'arc.

13. Procédé suivant l'une quelconque des revendications précédentes, dans lequel l'étape (iii) est atteinte en bougeant, de préférence en continu, une des électrodes relativement à l'autre lorsque le matériau est fondu/évaporé.

14. Procédé suivant l'une quelconque des revendications précédentes, dans lequel durant l'étape (iii), une rotation relative est induite entre les électrodes de manière à favoriser la séparation du matériau à partir de l'électrode.

15. Procédé suivant l'une quelconque des revendications précédentes, où ledit procédé est un procédé discontinu, les particules étant récupérées après le retrait du refroidissant.

16. Procédé suivant l'une quelconque des revendications 1 à 14, où le procédé est continu, le procédé incluant une étape de passage continu du refroidissant sur les électrodes.

17. Procédé suivant la revendication 16, dans lequel les particules sont séparées du refroidissant après le passage sur les électrodes et le refroidissant est recyclé pour retourner sur les électrodes dans un circuit continu.
